# EUROPÄISCHE PATENTSCHRIFT

(11) **EP 2 493 739 B1**
(45) Veröffentlichungstag und Bekanntmachung des Hinweises auf die Patenterteilung: **21.10.2015**
(21) Anmeldenummer: 10779230.1
(22) Anmeldetag: 27.10.2010
(51) Int. Cl.: B60T 17/22, B60T 13/66

(54) **NOTBREMSEINRICHTUNG EINES SCHIENENFAHRZEUGS**
EMERGENCY BRAKE UNIT OF A RAIL VEHICLE
DISPOSITIF DE FREINAGE DE SECOURS D'UN VÉHICULE SUR RAILS

(30) Priorität: 28.10.2009 DE 102009051019
(43) Veröffentlichungstag der Anmeldung: 05.09.2012
(73) Patentinhaber: KNORR-BREMSE Systeme für Schienenfahrzeuge GmbH, 80809 München (DE)
(72) Erfinder: RAU, Rainer, 82538 Geretsried (DE); GREMMEL, Heiko, 80997 München (DE)
(74) Vertreter: Mattusch, Gundula
(86) Internationale Anmeldenummer: PCT/EP2010/006557
(87) Internationale Veröffentlichungsnummer: WO 2011/050950

(56) Entgegenhaltungen:
- WO-A1-2005/021347
- WO-A2-00/24625
- DE-A1- 10 135 797
- DE-A1- 10 301 947
- US-A- 4 495 578

## Beschreibung

Die Erfindung geht aus von einer Notbremseinrichtung eines Schienenfahrzeugs mit wenigstens einer Notbremsschleife, durch welche wenigstens ein Steuergerät wenigstens einer elektro-pneumatischen Reibungsbremse und/oder wenigstens einer generatorischen Bremse zum Notbremsen mittels der elektro-pneumatischen Reibungsbremse und/oder der generatorischen Bremse steuerbar ist, gemäß dem Oberbegriff von Anspruch 1.

Eine gattungsgemäße Notbremseinrichtung ist aus der DE 195 10 755 C2 bekannt, welche im Notbremsfall verzögerungsgeregelt alle im Schienenfahrzeug verfügbaren Bremssysteme wie eine elektro-pneumatische Bremse und eine generatorische Bremse im Rahmen des sog. "blending" gleichzeitig ansteuert, um eine gewisse Mindestverzögerung des Schienenfahrzeugs zu erzielen. Die Steuerung der verschiedenen Bremssysteme erfolgt durch ein zentrales Notbremsüberwachungsgerät. Aufgrund des priorisierten Einsatzes der generatorischen Bremse sind Notbremsungen relativ verschleißarm. Eine Bedingung für den Einsatz der Notbremse ist jedoch die Funktionstüchtigkeit des elektronischen Notbremsüberwachungsgeräts. Bei einem Fehler in dem Notbremsüberwachungsgerät ist daher die Notbremsfunktion in Frage gestellt.

Weiterhin ist aus WO 2005/021347 eine Notbremseinrichtung eines Schienenfahrzeugs bekannt, bei welcher eine Sicherheitsschleife einerseits eine Bremssteuereinheit einer Bremseinheit und andererseits eine Notbremseinrichtung steuert. Im Notbremsfall, d.h. bei einem Öffnen der Sicherheitsschleife leitet die Bremssteuereinheit durch Ansteuern der Bremseinheit eine Notbremsung ein. Zusätzlich erfasst die Notbremseinrichtung mittels einer elektrischen Leitung und entsprechender Sensorik, ob bei der durch die Bremssteuereinheit eingeleiteten Notbremsung ein für die Notbremsung erforderlicher Mindestdruck vorliegt bzw. ob eine Gleitschutzfunktion aktiv ist. Falls dies nicht der Fall ist, greift die Notbremseinrichtung über ein Stellelement auf die Bremseinheit zu, um die Notbremsung einzuleiten. Dies bedingt allerdings einen Drucksensor zur Messung des Bremsdrucks im Notbremsfall.

Der vorliegenden Erfindung liegt demgegenüber die Aufgabe zugrunde, eine Notbremseinrichtung der oben erwähnten Art derart weiter zu entwickeln, dass sie einerseits einfach aufgebaut ist und andererseits eine hohe Verfügbarkeit aufweist. Diese Aufgabe wird erfindungsgemäß durch die Merkmale von Anspruch 1 gelöst.

### Offenbarung der Erfindung

Die Erfindung schlägt vor, dass das wenigstens eine Steuergerät eine elektrische Schalteinrichtung derart ansteuert, dass diese bei Vorliegen eines Fehlers in dem wenigstens einen Steuergerät oder in dessen Stromversorgung eine elektro-magnetische Notbremsventileinrichtung mit der Notbremsschleife in eine elektrische direkte Steuerverbindung derart schaltet, dass wenigstens ein pneumatischer Bremsaktuator der Reibungsbremse bei geöffneter Notbremsschleife durch die elektro-magnetische Notbremsventileinrichtung zur Erzeugung einer Notbremskraft pneumatisch gesteuert wird. Diese pneumatische Steuerung des pneumatischen Bremsaktuators durch die Notbremsventileinrichtung erfolgt beispielsweise mittels eines Relaisventils.

Dadurch wird eine rein elektro-pneumatische Rückfallebene als Redundanz für Notbremsungen geschaffen, welche einfach aufgebaut ist und insbesondere auf eine elektronische Steuerung der Verzögerung verzichten kann. Denn durch Öffnen der Notbremsschleife beispielsweise über einen Notschlagknopf wird die Notbremsventileinrichtung, welche bevorzugt durch ein erregt sperrendes und entregt auf Durchlass geschaltetes 2/2-Wege-Magnetventil gebildet wird, entregt und damit auf Durchlass geschaltet, wodurch druckgemindert Vorratsdruck als Vorsteuerdruck für ein beispielsweise den pneumatischen Bremsaktuator steuerndes Relaisventil durchgeschaltet wird, um im Bremsaktuator eine ungeregelte Notbremskraft zu erzeugen. Eine solche Relaisventileinrichtung ist in der Regel im Rahmen der elektro-pneumatischen Reibungsbremse ohnehin vorhanden, so dass zusätzlich lediglich die elektrische Schalteinrichtung, beispielsweise in Form eines einfachen Relais und das 2/2-Wege-Magnetventil zur Realisierung der zusätzlichen Sicherheitsebene notwendig sind. Mit diesen Maßnahmen wird folglich eine hohe Verfügbarkeit der Notbremseinrichtung mit einfachen Mitteln erzielt.

Nicht zuletzt ist die Notbremseinrichtung stark diversitär aufgebaut, d.h. der Aufbau und die Struktur der einzelnen für eine Notbremsung heran gezogenen Bremssysteme ist unterschiedlich, indem eine elektro-pneumatische Reibungsbremse, eine generatorische Bremse sowie eine überwiegend pneumatische Reibungsbremse im Notbremsfall gemäß einer vorgegebenen Rangfolge oder Hierarchie eingesetzt werden. Dadurch ergibt sich ebenfalls eine hohe zu erwartende Verfügbarkeit der Notbremseinrichtung.

Um die im Hochgeschwindigkeitsbereich notwendigen Bremsenergien aufnehmen zu können, wird im Notbremsfall mit generatorischer und elektro-pneumatischer Bremse verzögert. Erst wenn die Bremswirkung anhand der vorgegebenen geschwindigkeitsabhängigen Sollwerte in den in dem Steuergerät der elektrodynamische Bremse gespeicherten Kennlinien nicht durch die generatorische Bremse erzielt wird, übernimmt das Steuergerät der Reibungsbremse vollständig die geschwindigkeitsabhängige Verzögerung durch Steuerung des Vorsteuerdrucks. Nach einem Ausfall der elektro-pneumatischen Steuerung der pneumatischen Reibungsbremse bzw. nach Ausfall der generatorischen Bremse wird dann automatisch die Steuerung der pneumatischen Reibungsbremse bzw. des pneumatischen Bremsaktuators direkt auf die Notbremsschleife geschaltet, welche dann über die Notbremsventileinrichtung und gegebenenfalls eine Relaisventileinrichtung den Bremsaktuator steuert. Dadurch wird der pneumatische Bremsaktuator beim Öffnen der Notbremsschleife zugespannt, bei geschlossener Notbremsschleife, wenn also keine Notbremsung angefordert wird, verbleibt die pneumatische Reibungsbremse bzw. der Bremsaktuator hingegen in gelöstem Zustand.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt wird die mit der Notbremsschleife in Steuerverbindung gebrachte elektro-magnetische Notbremsventileinrichtung durch Öffnen der Notbremsschleife in eine Notbremsstellung geschaltet, in welcher ein Druckluftvorrat mit einer Relaisventileinrichtung in Strömungsverbindung gebracht wird, welche den pneumatischen Bremsaktuator der Reibungsbremse steuert. Ansonsten ist die Notbremsventileinrichtung in eine Grundstellung geschaltet, in welcher diese Strömungsverbindung gesperrt ist. Wie bereits erwähnt kann dies durch ein erregt sperrendes und entregt auf Durchlass geschaltetes 2/2-Wege-Magnetventil als Notbremsventileinrichtung realisiert werden.

Gemäß einer Weiterbildung wird die elektro-magnetische Notbremsventileinrichtung durch ein Steuergerät einer Gleitschutzeinrichtung des Schienenfahrzeugs derart angesteuert, dass sie einen Vorsteuerdruck für die Relaisventileinrichtung geschwindigkeitsabhängig erzeugt, derart, dass bei eine vorgegebene Grenzgeschwindigkeit unterschreitenden Geschwindigkeiten eine erste Bremskraft und bei die Grenzgeschwindigkeit erreichenden oder diese überschreitenden Geschwindigkeiten eine zweite, gegenüber der ersten Bremskraft kleine Bremskraft durch den von der Relaisventileinrichtung gesteuerten pneumatischen Bremsaktuator erzeugt wird. Dabei wird angenommen, dass das Steuergerät der Gleitschutzeinrichtung und das Steuergerät der elektro-pneumatischen Reibungsbremse bzw. das Steuergerät der generatorischen Bremse jeweils getrennte Einheiten darstellen und ein Ausfall auch des Steuergeräts der Gleitschutzeinrichtung sehr unwahrscheinlich ist, so dass wenn auch keine geregelte so doch wenigstens eine gestufte Notbremskraft mit hoher Wahrscheinlichkeit zur Verfügung steht. Falls auch das Steuergerät der Gleitschutzeinrichtung ausfällt, was beispielsweise bei einem Gesamtstromausfall im Schienenfahrzeug oder im Schienenfahrzeugzug der Fall wäre, so wäre könnte immer noch eine konstante Notbremskraft durch Steuerung des pneumatischen Bremsaktuators durch die Notbremsventileinrichtung erzeugt werden.

Diese Weiterbildung der Notbremseinrichtung in Form einer geschwindigkeitsabhängig gestuften Notbremskraft trägt den besonderen Anforderungen von Hochgeschwindigkeits-Schienenfahrzeugen Rechnung, welche Spitzengeschwindigkeiten von bis zu 380 km/h erreichen. Denn würde die pneumatische Reibungsbremse bei derart hohen Spitzengeschwindigkeiten mit dem vollen Bremsdruck bzw. mit der maximalen Notbremskraft beaufschlagt, so würde die thermische Belastbarkeit der Reibungsbremse überschritten werden. Deshalb wird mit der pneumatischen Reibungsbremse im Notbremsfall und bei fehlerbehafteter elektronischer Steuerung der Reibungsbremse bzw. der generatorischen Bremse bevorzugt gestuft notgebremst, wobei bei höheren Geschwindigkeiten mit geringerer Bremskraft gebremst wird als bei niedrigeren Geschwindigkeiten.

Besonders bevorzugt beinhaltet die elektrische Schalteinrichtung wenigstens ein elektrisches Relais, welches stromlos die elektro-magnetische Notbremsventileinrichtung mit der Notbremsschleife in eine elektrische Steuerverbindung schaltet und bestromt eine solche Steuerverbindung sperrt. Bei intaktem das Relais steuernden Steuergerät ist dann das Relais bestromt, wodurch die Notbremsventileinrichtung von der Notbremsschleife getrennt und deshalb nicht von ihr angesteuert werden kann. Im Fehlerfall ist das Steuergerät dagegen stromlos, wodurch das Relais die elektro-magnetische Notbremsventileinrichtung mit der Notbremsschleife in eine elektrische Steuerverbindung schaltet und somit die Notbremsventileinrichtung von der Notbremsschleife direkt gesteuert werden kann.

Besonders bevorzugt ist einerseits ein von der Notbremsschleife getrennt ansteuerbares Steuergerät der elektro-pneumatischen Reibungsbremse und andererseits ein von der Notbremsschleife getrennt ansteuerbares Steuergerät der generatorischen Bremse vorhanden.

Dabei steuert das Steuergerät der elektro-pneumatischen Reibungsbremse einen elektro-pneumatischen Druckregler anhand von geschwindigkeitsbezogenen Kennlinien, welcher einen Vorsteuerdruck zur Steuerung einer den pneumatischen Bremsaktuator der Reibungsbremse steuernden Relaisventileinrichtung erzeugt, wobei der Vorsteuerdruck mittels eines Drucksensors gemessen und durch im Steuergerät der elektro-pneumatischen Reibungsbremse integrierte Routinen im Rahmen einer Vorsteuerdruckregelung geregelt wird. Dadurch ergibt sich im Notbremsfall eine gesteuerte Notbremskraft.

Weiterhin ist wenigstens ein Geschwindigkeitssensor vorgesehen, um ein Geschwindigkeitssignal in das Steuergerät der elektro-pneumatischen Reibungsbremse einzusteuem. Dieses Geschwindigkeitssignal ist notwendig, um den jeweiligen Soll-Vorsteuerdruck anhand der geschwindigkeitsabhängigen Kennlinien im Rahmen der Vorsteuerdruckregelung für die elektro-pneumatische Bremse zu ermitteln.

Gemäß einer besonders zu bevorzugenden Weiterbildung ist eine Kommunikation des Steuergeräts der elektro-pneumatischen Reibungsbremse mit dem Steuergerät der generatorischen Bremse vorgesehen, beispielsweise über eine nur für diesen Zweck vorgesehene Festverdrahtung. Dadurch ist auch eine Überwachung des Steuergeräts der generatorischen Bremse durch das Steuergerät der elektro-pneumatischen Reibungsbremse möglich. Bevorzugt erfolgt daher eine Überwachung des Steuergeräts der generatorischen oder elektro-dynamischen Bremse durch das Steuergerät der elektro-pneumatischen Bremse.

Die Notbremsvorrichtung weist dann eine hierarchische Fehlerbehandlungsstruktur auf, derart, dass
a) bei intakten Steuergeräten und intakter Spannungsversorgung der Steuergeräte und bei geöffneter Notbremsschleife die Notbremskraft durch Zusammenwirken der elektro-pneumatischen Reibungsbremse und der generatorischen Bremse erzeugt wird (blending), wobei das Steuergerät der elektro-pneumatischen Reibungsbremse den elektro-pneumatischen Druckregler steuert, welcher den Vorsteuerdruck zur Steuerung der den pneumatischen Bremsaktuator der Reibungsbremse steuernden Relaisventileinrichtung erzeugt und wobei der Bremsaktuator abhängig von dem geregelten Vorsteuerdruck die Notbremskraft geschwindigkeitsabhängig und stufenlos erzeugt,
b) bei Vorliegen eines Fehlers im Steuergerät der generatorischen Bremse oder in dessen Spannungsversorgung die generatorische Bremse durch das Steuergerät der elektro-pneumatischen Bremse deaktiviert und bei geöffneter Notbremsschleife die Notbremskraft alleine mit der elektro-pneumatischen Reibungsbremse erzeugt wird, wobei das Steuergerät der elektro-pneumatischen Reibungsbremse den elektro-pneumatischen Druckregler steuert, welcher den Vorsteuerdruck zur Steuerung der den pneumatischen Bremsaktuator der Reibungsbremse steuernden Relaisventileinrichtung erzeugt, wobei der Bremsaktuator abhängig von dem geregelten Vorsteuerdruck die Notbremskraft geschwindigkeitsabhängig und stufenlos erzeugt,
c) bei Vorliegen eines Fehlers im Steuergerät der generatorischen Bremse oder in dessen Spannungsversorgung und bei Vorliegen eines Fehlers im Steuergerät der elektro-pneumatischen Bremse oder in dessen Spannungsversorgung bei geöffneter Notbremsschleife die Notbremsventileinrichtung die Relaisventileinrichtung pneumatisch ansteuert, damit diese den pneumatischen Bremsaktuator der Reibungsbremse ansteuert, um die Notbremskraft zu erzeugen, wobei die Notbremskraft konstant ist oder geschwindigkeitsabhängig und in wenigstens zwei Stufen gesteuert wird.

Falls die Notbremseinrichtung in einem aus mehreren Schienenfahrzeugen bestehenden Schienenfahrzeugverband eingesetzt wird, so ist die oben beschriebene hierarchische Fehlerbehandlungsstruktur gemäß der Merkmale a) bis c) fahrzeugweise bevorzugt vorgesehen, d.h. dass sich Fehler in einem Schienenfahrzeug auch nur Konsequenzen in dem betroffenen Schienenfahrzeug haben. Fällt beispielsweise in einem bestimmten Schienenfahrzeug (hier: Triebfahrzeug) eines Schienenfahrzeugverbands die generatorische Bremse aus, so wird diese gemäß Schritt b) nur bei diesem Schienenfahrzeug deaktiviert und nur mit der elektro-pneumatischen Reibungsbremse notgebremst. Dies hat den Vorteil, dass die Reibungsbremsen der nicht von dem Fehler betroffenen Triebfahrzeuge des Schienenfahrzeugverbands weniger beansprucht werden, da bei diesen die generatorische Bremse noch wirksam ist und deshalb eingesetzt wird.

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt die einzige Figur einen schematischen Aufbauplan einer Notbremseinrichtung eines Triebfahrzeugs eines Schienenfahrzeugverbands gemäß einer bevorzugten Ausführungsform der Erfindung.

### Beschreibung des Ausführungsbeispiels

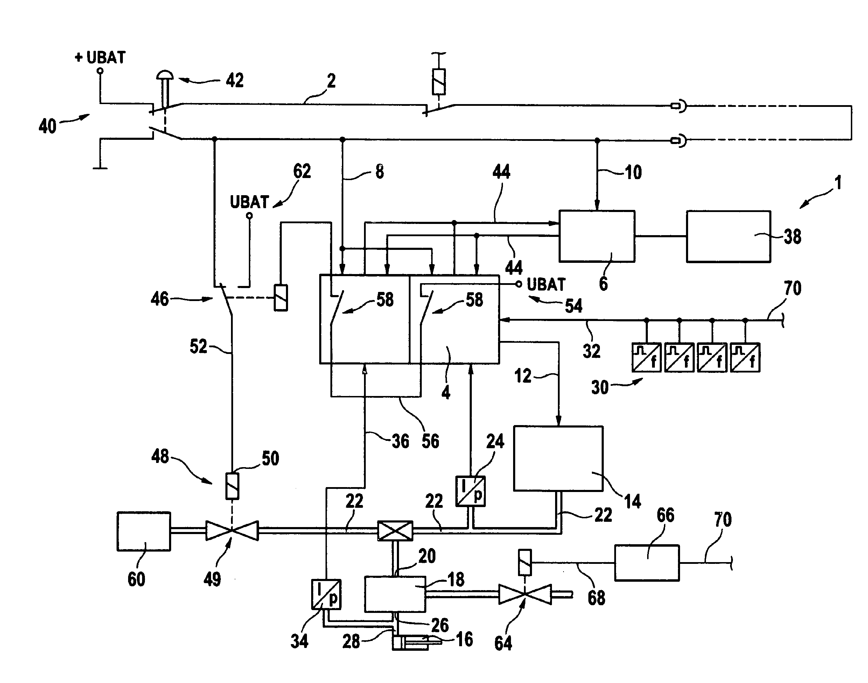

In der Fig.1 ist eine Notbremseinrichtung eines Triebfahrzeugs eines Schienenfahrzeugverbands mit einer einzigen Notbremsschleife 2 gezeigt, durch welche einerseits ein Steuergerät 4 einer elektro-pneumatischen Reibungsbremse und andererseits ein Steuergerät 6 einer generatorischen oder elektro-dynamischen Bremse zum Notbremsen mittels der elektro-pneumatischen Reibungsbremse und der generatorischen Bremse jeweils mittels einer eigenen und separaten von der Notbremsschleife 2 abgezweigten elektrischen Leitung 8, 10 steuerbar ist. Besonders bevorzugt stellen dabei das Steuergerät 4 der elektro-pneumatischen Reibungsbremse einerseits und das Steuergerät 6 der generatorischen Bremse andererseits voneinander unabhängige Baueinheiten dar.

Das Steuergerät 4 der elektro-pneumatischen Reibungsbremse ist bevorzugt redundant aufgebaut, wie durch die zwei Hälften in der Figur symbolisiert wird, d.h. dass die Soft- und Hardwarestrukturen doppelt vorhanden sind und im Fehlerfall die jeweils identische Struktur die Funktion der ausgefallenen Struktur übernimmt.

Dabei steuert das Steuergerät 4 der elektro-pneumatischen Reibungsbremse über eine elektrische Steuerleitung 12 einen elektro-pneumatischen Druckregler 14 anhand von gespeicherten geschwindigkeitsbezogenen Kennlinien. Das bedeutet, dass in einem Speicher des Steuergeräts 4 Kennlinien abgelegt sind, welche die Abhängigkeit eines Sollwerts für einen von dem Druckregler 14 zu erzeugenden Vorsteuerdruck cv von der jeweils gefahrenen Geschwindigkeit des Schienenfahrzeugs kennzeichnen.

Der elektro-pneumatische Druckregler 14 erzeugt dann in Abhängigkeit von dem vom Steuergerät 4 der elektro-dynamischen Reibungsbremse gelieferten elektrischen Signal einen Vorsteuerdruck cv zur Steuerung einer einen pneumatischen Bremsaktuator 16 der Reibungsbremse steuernden Relaisventileinrichtung 18. Die Relaisventileinrichtung 18 besteht dabei bevorzugt aus einem einzigen Relaisventil, dessen Steueranschluss 20 mittels einer Steuerdruckleitung 22 mit dem Druckregler 14 in Verbindung steht. Der von dem elektro-pneumatischen Druckregler 14 ausgesteuerte Vorsteuerdruck cv wird mit einem in der Steuerdruckleitung 22 vorhandenen Drucksensor 24 gemessen und durch im Steuergerät 4 der elektro-pneumatischen Reibungsbremse integrierte Routinen im Rahmen einer Vorsteuerdruckregelung geregelt. Dadurch ergibt sich an einem Arbeitsausgang 26 des Relaisventils 18, welcher über eine Druckmittelleitung 28 mit dem pneumatischen Bremsaktuator 16, beispielsweise mit einem aktiven pneumatischen Bremszylinder in Verbindung steht, ein geregelter Bremsdruck c, welcher im Notbremsfall eine geregelte Notbremskraft hervorruft.

Weiterhin sind Geschwindigkeitssensoren 30 vorgesehen, um der gerade gefahrenen Geschwindigkeit entsprechende Geschwindigkeitssignale über eine elektrische Signalleitung 32 in das Steuergerät 4 der elektro-pneumatischen Reibungsbremse einzusteuem. Diese Geschwindigkeitssignale werden im Steuergerät 4 herangezogen, um anhand der geschwindigkeitsbezogenen Kennlinien den jeweiligen Soll-Vorsteuerdruck cv für das Relaisventil 18 im Rahmen der Vorsteuerdruckregelung zu ermitteln. Darüber hinaus ist ein weiterer Drucksensor 34 vorhanden, welcher über eine Signalleitung 36 den Wert des vom Relaisventil 18 aufgrund des Vorsteuerdrucks cv erzeugten Bremsdrucks c dem Steuergerät 4 über rückzumeldet.

Parallel dazu steuert das Steuergerät 6 der elektro-dynamischen Bremse bzw. der generatorischen Bremse eine Antriebseinheit 38 des Schienenfahrzeugs im Sinne einer generatorischen Bremse in bekannter Weise. Dieses Steuergerät 6 beinhaltet ebenfalls geschwindigkeitsbezogene Kennlinien, wodurch eine abhängig von der jeweils gefahrenen Geschwindigkeit abhängige generatorische Bremskraft erzeugt wird. Dabei sind die geschwindigkeitsbezogenen Kennlinien der beiden Steuergeräte 4 und 6 so aufeinander abgestimmt, dass die Notbremskräfte beider Bremssysteme eine vorgegebene Verzögerung der Notbremse erreichen (Kennlinienblending).

Falls daher die von einer Spannungsquelle 40 mit elektrischer Energie versorgte elektrische Notbremsschleife 2 bei einer Notbremsanforderung beispielsweise durch Auslösung eines Notschlagkopfes 42 geöffnet wird, erhalten beide Steuergeräte 4 und 6 über die elektrischen Leitungen Notbremsanforderungssignale, wobei die beiden Steuergeräte 4 und 6 durch bidirektionale elektrische Leitungen 44 mit einander kommunizieren, um ein "blending" auszuführen, d.h., dass sich die Notbremskraft zur Schonung der verschleißbehafteten Reibungsbremse aus einem von der elektro-pneumatischen Bremse gelieferten Anteil und einem von der generatorischen Bremse gelieferten Anteil zusammensetzt. Weiterhin ist auch eine gegenseitige Überwachung der Steuergeräte 4, 6 der generatorischen Bremse und der elektro-pneumatischen Reibungsbremse vorgesehen. Bevorzugt erfolgt eine Überwachung des Steuergeräts 6 der generatorischen oder elektro-dynamischen Bremse durch das Steuergerät 4 der elektro-pneumatischen Bremse.

Das Steuergerät der elektro-pneumatischen Reibungsbremse steuert eine elektrische Schalteinrichtung, beispielsweise ein Relais 46 derart an, dass dieses bei Vorliegen eines Fehlers in dem Steuergerät 4 oder in dessen Energieversorgung eine elektro-magnetische Notbremsventileinrichtung 48 mit der Notbremsschleife 2 in eine elektrische direkte Steuerverbindung schaltet. Dann wird kann der pneumatische Bremsaktuator 16 der Reibungsbremse bei geöffneter Notbremsschleife 2 durch die elektro-magnetische Notbremsventileinrichtung 48 zur Erzeugung einer Notbremskraft über das Relaisventil 18 pneumatisch gesteuert werden. Die Notbremsventileinrichtung 48 beinhaltet bevorzugt ein erregt sperrendes und entregt auf Durchlass geschaltetes 2/2-Wege-Magnetventil als Notbremsventil 49 und die elektrische Schalteinrichtung ein in seiner Grundstellung bestromtes elektrisches Relais 46. Dabei wird ein elektrischer Steuereingang 50 des 2/2-Wege-Magnetventils 49 von einer von der Notbremsschleife 2 heran geführten Steuerleitung 52 angesteuert, in welche das Relais 46 geschaltet ist. In der Grundstellung wird die Steuerleitung 52 zum Notbremsventil 49 durch das Relais 46 unterbrochen.

Das Relais 46 wird durch eine mit einer elektrischen Energieversorgung (z.B. Batterie) 54 versorgten Stromschleife 56 im Steuergerät 4 der elektro-pneumatischen Bremse gesteuert. Eine Entstromung dieses Steuergeräts 4 bewirkt ein Umschalten eines in die Stromschleife 56 integrierten elektrischen Schalters 58, was wiederum zu einer Entstromung des Relais 46 führt, welches daraufhin aus seiner Grundstellung umschaltet, so dass der elektrische Steuereingang 50 des 2/2-Wege-Magnetventils 49 direkt mit der Notbremsschleife 2 elektrisch verbunden wird. Diese Situation ist in der Figur gezeigt.

Durch Öffnen der Notbremsschleife 2 wird das 2/2-Wege-Magnetventil 49 entregt und damit auf Durchlass geschaltet, wodurch Vorratsdruck eines Druckreservoirs 60 als Vorsteuerdruck cv für das Relaisventil 18 durchgeschaltet wird. Dieser Vorsteuerdruck cv erzeugt dann am Arbeitsausgang 26 des Relaisventils 18 einen Bremsdruck c für den Bremszylinder 16, um eine ungeregelte Notbremskraft zu erzeugen.

Ansonsten ist der Steuereingang 50 des 2/2-Wege-Magnetventils 49 über das bei intaktem Steuergerät 4 erregte Relais 46 mit einer elektrischen Energieversorgung (z.B. Batterie) 62 verbunden und daher in seine erregte Grundstellung geschaltet, in welcher die Strömungsverbindung zwischen dem Druckreservoir 60 und dem Relaisventil 18 gesperrt ist.

Bevorzugt ist außer dem Notbremsventil 49 ein in die Steuerdruckleitung 22 geschaltetes Magnetventil 64 im Rahmen der Notbremsventileinrichtung 48 vorgesehen, welches durch ein Steuergerät 66 einer Gleitschutzeinrichtung des Schienenfahrzeugs über eine elektrische Steuerleitung 68 derart angesteuert wird, dass es den im Notbremsfall von dem Druckreservoir 60 abgeleiteten Vorsteuerdruck cv für das Relaisventil 18 geschwindigkeitsabhängig erzeugt. Das Geschwindigkeitssignal wird dabei durch die mit dem Steuergerät 66 der Gleitschutzeinrichtung über eine Signalleitung 70 in Verbindung stehenden Geschwindigkeitssensoren 30 gewonnen. Das Magnetventil 64 der Notbremsventileinrichtung verändert daher den über das geöffnete Notbremsventil 49 in die Druckmittelleitung 22 eingesteuerten Vorsteuerdruck cv für das Relaisventil 18 geschwindigkeitsabhängig und gestuft.

Die geschwindigkeitsabhängige Erzeugung des Versteuerdrucks cv im Rahmen einer Notbremsung bei ausgefallenem Steuergerät 4 und mit dem pneumatischen Bremsaktuator 16 erfolgt dabei derart, dass bei eine vorgegebene Grenzgeschwindigkeit überschreitenden Geschwindigkeiten eine erste Bremskraft und bei die Grenzgeschwindigkeit erreichenden oder diese unterschreitenden Geschwindigkeiten eine zweite, gegenüber der ersten Bremskraft größere Bremskraft durch den vom Relaisventil 18 gesteuerten pneumatischen Bremsaktuator 16 erzeugt wird. Damit führt bei hoher Geschwindigkeit, beispielsweise bei einer Geschwindigkeit von mehr als 200 km/h der Vorsteuerdruck cv am Relaisventil 18 zu einem moderaten Bremsdruck c, was eine hohe Laufstabilität und eine relativ geringe thermische Belastung der pneumatischen Reibungsbremse bedingt. Nach Unterschreiten der Grenz- oder Umschaltgeschwindigkeit bei beispielsweise 200 km/h wird der vom Vorratsdruck des Druckreservoirs abgeleitete Vorsteuerdruck cv für das Relaisventil 18 durch das Magnetventil 64 so geändert, dass der volle Notbremsdruck c in den Bremszylinder 16 eingesteuert wird, weil davon ausgegangen werden kann, dass bei niedrigeren Geschwindigkeiten die thermische Belastung der Reibungsbremse niedriger und die Laufstabilität gewährleistet ist. Hintergrund dieser Überlegungen ist, dass die Fahrgeschwindigkeit in die durch die Bremse zu bewältigende kinetische Energie quadratisch eingeht.

Dieses Magnetventil 64 der Notbremsventileinrichtung ist dabei derart ausgebildet, dass es bei einem Ausfall des Steuergeräts 66 der Gleitschutzeinrichtung über einen vom Vorratsdruck des Druckreservoirs 60 abgeleiteten und konstanten Vorsteuerdruck cv am Steuereingang 20 des Relaisventils 18 erzeugt und in diesem Fall daher die Notbremskraft geschwindigkeitsunabhängig konstant ist.

Die Notbremsvorrichtung 1 weist dann eine hierarchische Fehlerbehandlungsstruktur wie folgt auf:
Bei intakten Steuergeräten 4, 6 und intakter Spannungsversorgung der Steuergeräte 4, 6 wird bei geöffneter Notbremsschleife 2 die Notbremskraft durch Zusammenwirken der elektro-pneumatischen Reibungsbremse und der generatorischen Bremse erzeugt (blending). Dabei steuert das Steuergerät 4 der elektro-pneumatischen Reibungsbremse den elektro-pneumatischen Druckregler 14 kennlinienbasiert, welcher den Vorsteuerdruck cv zur Steuerung des den pneumatischen Bremsaktuator 16 der Reibungsbremse steuernden Relaisventils 18 erzeugt. Dieser Vorsteuerdruck cv wird geregelt. Dann erzeugt der pneumatische Bremsaktuator 16 abhängig von dem geregelten Vorsteuerdruck cv eine geschwindigkeitsabhängige und vorsteuerdruckgeregelte Notbremskraft, welche einen stufenlosen bzw. kontinuierlichen Verlauf aufweist. Parallel dazu erzeugt das Steuergerät 6 der generatorischen Bremse in der Antriebseinheit 38 eine generatorische Bremskraft, welche der Bremskraft der elektro-pneumatischen Bremse überlagert wird.

Bei Vorliegen eines Fehlers im Steuergerät 6 der generatorischen Bremse oder in dessen Spannungsversorgung wird die generatorische Bremse durch das Steuergerät 4 der elektro-pneumatischen Bremse deaktiviert. Bei geöffneter Notbremsschleife 2 wird dann die Notbremskraft alleine mit der elektro-pneumatischen Reibungsbremse erzeugt, wobei das Steuergerät 4 der elektro-pneumatischen Reibungsbremse wie oben beschrieben den elektro-pneumatischen Druckregler 14 steuert, welcher den Vorsteuerdruck cv zur Steuerung des den pneumatischen Bremsaktuator 16 der Reibungsbremse steuernden Relaisventils 18 erzeugt, wobei der Bremsaktuator abhängig von dem geregelten Vorsteuerdruck cv wiederum eine geschwindigkeitsabhängige und vorsteuerdruckgeregelte Notbremskraft erzeugt, welche einen stufenlosen und kontinuierlichen Verlauf aufweist.

Bei Vorliegen eines Fehlers im Steuergerät 6 der generatorischen Bremse oder in dessen Spannungsversorgung und bei Vorliegen eines Fehlers im Steuergerät 4 der elektro-pneumatischen Bremse oder in dessen Spannungsversorgung steuert bei geöffneter Notbremsschleife 2 das nun entregte Notbremsventil 49 das Relaisventil 18 mit einem durch das Magnetventil 64 geschwindigkeitsabhängig gestuften Vorsteuerdruck cv pneumatisch an, damit dieses einen Bremsdruck c für den pneumatischen Bremsaktuator 16 der Reibungsbremse aussteuert, um eine ungeregelte, aber geschwindigkeitsabhängig gestufte Notbremskraft zu erzeugen. Diese Notbremskraft wird bei funktionsfähigem Steuergerät 66 der Gleitschutzeinrichtung geschwindigkeitsabhängig und in wenigstens zwei Stufen generiert und ist bei einem Ausfall des Steuergeräts 66 der Gleitschutzeinrichtung konstant.

Falls die Notbremseinrichtung 1 in mehreren Schienenfahrzeugen eines Schienenfahrzeugverbands vorhanden ist, so ist bevorzugt die oben beschriebene hierarchische Fehlerbehandlungsstruktur fahrzeugweise vorgesehen, d.h. dass Fehler in den Steuergeräten 4, 6 und 66 eines Schienenfahrzeugs lediglich Konsequenzen in dem betroffenen Schienenfahrzeug haben. Fällt beispielsweise in einem bestimmten Schienenfahrzeug (hier: Triebfahrzeug) eines Schienenfahrzeugverbands die generatorische Bremse aus, so wird diese nur bei diesem Schienenfahrzeug deaktiviert und nur mit der elektro-pneumatischen Reibungsbremse notgebremst.

### Bezugszeichenliste

- 1: Notbremseinrichtung
- 2: Notbremsschleife
- 4: Steuergerät
- 6: Steuergerät
- 8: Leitung
- 10: Leitung
- 12: Steuerleitung
- 14: Druckregler
- 16: Bremsaktuator
- 18: Relaisventil
- 20: Steueranschluss
- 22: Steuerdruckleitung
- 24: Drucksensor
- 26: Arbeitsausgang
- 28: Druckmittelleitung
- 30: Geschwindigkeitssensoren
- 32: Signalleitung
- 34: Drucksensor
- 36: Signalleitung
- 38: Antriebseinheit
- 40: Spannungsquelle
- 42: Notschlagknopf
- 44: Leitungen
- 46: Relais
- 48: Notbremsventileinrichtung
- 49: Notbremsventil
- 50: Steuereingang
- 52: Steuerleitung
- 54: Energieversorgung
- 56: Stromschleife
- 58: Schalter
- 60: Druckreservoir
- 62: Energieversorgung
- 64: Magnetventil
- 66: Steuergerät
- 68: Steuerleitung
- 70: Signalleitung

## Patentansprüche

1. Notbremseinrichtung (1) eines Schienenfahrzeugs mit wenigstens einer Notbremsschleife (2), durch welche wenigstens ein Steuergerät (4, 6) wenigstens einer elektro-pneumatischen Reibungsbremse und/oder wenigstens einer generatorischen Bremse zum Notbremsen mittels der elektro-pneumatischen Reibungsbremse und/oder der generatorischen Bremse steuerbar ist, **dadurch gekennzeichnet, dass** das wenigstens eine Steuergerät (4) eine elektrische Schalteinrichtung (46) derart ansteuert, dass diese bei Vorliegen eines Fehlers in dem wenigstens einen Steuergerät (4) oder in dessen Stromversorgung eine elektro-magnetische Notbremsventileinrichtung (48, 49) mit der Notbremsschleife (2) in eine elektrische, direkte Steuerverbindung derart schaltet, dass wenigstens ein pneumatischer Bremsaktuator (16) der Reibungsbremse bei geöffneter Notbremsschleife (2) durch die elektro-magnetische Notbremsventileinrichtung (48, 49) zur Erzeugung einer Notbremskraft pneumatisch gesteuert wird.

2. Notbremseinrichtung nach Anspruch 1, **dadurch gekennzeichnet, dass** die mit der Notbremsschleife (2) in Steuerverbindung gebrachte elektro-magnetische Notbremsventileinrichtung (48, 49) durch Öffnen der Notbremsschleife (2) in eine Notbremsstellung geschaltet wird, in welcher ein Druckluftvorrat (60) mit einer Relaisventileinrichtung (18) in Strömungsverbindung gebracht wird, welche den pneumatischen Bremsaktuator (16) der Reibungsbremse steuert, und ansonsten in eine Grundstellung geschaltet ist, in welcher diese Strömungsverbindung gesperrt ist.

3. Notbremseinrichtung nach Anspruch 2, **dadurch gekennzeichnet, dass** ein Magnetventil (64) der elektro-magnetischen Notbremsventileinrichtung (48) durch ein Steuergerät (66) einer Gleitschutzeinrichtung des Schienenfahrzeugs derart angesteuert ist, dass sie einen Vorsteuerdruck (cv) für die Relaisventileinrichtung (18) geschwindigkeitsabhängig erzeugt, wobei bei eine vorgegebene Grenzgeschwindigkeit überschreitenden Geschwindigkeiten eine erste Bremskraft und bei die Grenzgeschwindigkeit erreichenden oder diese unterschreitenden Geschwindigkeiten eine zweite, gegenüber der ersten Bremskraft größere Bremskraft durch den von der Relaisventileinrichtung gesteuerten pneumatischen Bremsaktuator (16) erzeugt wird.

4. Notbremseinrichtung nach einem der vorhergehenden Ansprüche, **dadurch gekennzeichnet, dass** die elektrische Schalteinrichtung (46) wenigstens ein elektrisches Relais beinhaltet, welches stromlos die elektro-magnetische Notbremsventileinrichtung (48, 49) mit der Notbremsschleife (2) in eine elektrische Steuerverbindung schaltet und bestromt eine solche Steuerverbindung sperrt.

5. Notbremseinrichtung nach einem der vorhergehenden Ansprüche, **dadurch gekennzeichnet, dass** sie einerseits ein von der Notbremsschleife (2) separat ansteuerbares Steuergerät (4) der elektro-pneumatischen Reibungsbremse und andererseits ein von der Notbremsschleife (2) separat ansteuerbares Steuergerät (6) der generatorischen Bremse beinhaltet.

6. Notbremseinrichtung nach Anspruch 5, **dadurch gekennzeichnet, dass** das Steuergerät (4) der elektro-pneumatischen Reibungsbremse einen elektro-pneumatischen Druckregler (14) anhand von geschwindigkeitsbezogenen Kennlinien steuert, welcher einen Vorsteuerdruck (cv) zur Steuerung einer den pneumatischen Bremsaktuator (16) der Reibungsbremse steuernden Relaisventileinrichtung (18) erzeugt, wobei der Vorsteuerdruck (cv) mittels eines Drucksensors (24) gemessen und durch im Steuergerät (4) der elektro-pneumatischen Reibungsbremse integrierte Routinen im Rahmen einer Vorsteuerdruckregelung geregelt wird.

7. Notbremseinrichtung nach Anspruch 6, **dadurch gekennzeichnet, dass** wenigstens ein Geschwindigkeitssensor (30) vorgesehen ist, um ein Geschwindigkeitssignal in das Steuergerät (4) der elektro-pneumatischen Reibungsbremse einzusteuern.

8. Notbremseinrichtung nach Anspruch 7, **gekennzeichnet durch** eine Kommunikation des Steuergeräts (4) der elektro-pneumatischen Reibungsbremse mit dem Steuergerät (6) der generatorischen Bremse, wobei die Funktion des Steuergeräts (6) der generatorischen Bremse von dem Steuergerät (4) der elektro-pneumatischen Reibungsbremse überwacht wird.

9. Notbremseinrichtung nach Anspruch 8, **dadurch gekennzeichnet, dass** sie eine hierarchische Fehlerbehandlungsstruktur aufweist, derart, dass:
a) Bei intakten Steuergeräten (4, 6) und intakter Spannungsversorgung der Steuergeräte (4, 6) und bei geöffneter Notbremsschleife (2) die Notbremskraft durch Zusammenwirken der elektro-pneumatischen Reibungsbremse und der generatorischen Bremse erzeugt wird (blending), wobei das Steuergerät (4) der elektro-pneumatischen Reibungsbremse den elektro-pneumatischen Druckregler (14) steuert, welcher den Vorsteuerdruck (cv) zur Steuerung der den pneumatischen Bremsaktuator (16) der Reibungsbremse steuernden Relaisventileinrichtung (18) erzeugt und wobei der Bremsaktuator (16) abhängig von dem geregelten Vorsteuerdruck (cv) die Notbremskraft geschwindigkeitsabhängig und stufenlos erzeugt,
b) bei Vorliegen eines Fehlers im Steuergerät (6) der generatorischen Bremse oder in dessen Spannungsversorgung die generatorische Bremse durch das Steuergerät (4) der elektro-pneumatischen Bremse deaktiviert und bei geöffneter Notbremsschleife (2) die Notbremskraft alleine mit der elektro-pneumatischen Reibungsbremse erzeugt wird, wobei das Steuergerät (4) der elektro-pneumatischen Reibungsbremse den elektro-pneumatischen Druckregler (14) steuert, welcher den Vorsteuerdruck (cv) zur Steuerung der den pneumatischen Bremsaktuator (16) der Reibungsbremse steuernden Relaisventileinrichtung (18) erzeugt, wobei der Bremsaktuator (16) abhängig von dem geregelten Vorsteuerdruck (cv) die Notbremskraft geschwindigkeitsabhängig und stufenlos erzeugt,
c) bei Vorliegen eines Fehlers im Steuergerät (4) der elektro-pneumatischen Bremse oder in dessen Spannungsversorgung bei geöffneter Notbremsschleife (2) die Notbremsventileinrichtung (48) die Relaisventileinrichtung (18) pneumatisch ansteuert, damit diese den pneumatischen Bremsaktuator (16) der Reibungsbremse ansteuert, um die Notbremskraft zu erzeugen, wobei die Notbremskraft konstant ist oder geschwindigkeitsabhängig und in wenigstens zwei Stufen gesteuert wird.

10. Aus mehreren Schienenfahrzeugen bestehender Schienenfahrzeugverband mit einer Notbremseinrichtung nach Anspruch 9, **dadurch gekennzeichnet, dass** die hierarchische Fehlerbehandlungsstruktur gemäß der Merkmale a) bis c) von Anspruch 9 fahrzeugweise vorgesehen ist.

## Claims

1. Emergency brake unit (1) of a rail vehicle, comprising at least one emergency brake loop (2), whereby at least one control unit (4, 6) of at least one electropneumatic friction brake and/or at least one regenerative brake can be controlled for emergency braking by means of the electropneumatic friction brake and/or of the regenerative brake, **characterised in that** the at least one control unit (4) selects an electric switching device (46) in such a way that it switches, in the presence of a fault in the at least one control unit (4) or in its power supply, an electromagnetic emergency brake valve device (48, 49) into a direct electric control connection with the emergency brake loop (2) in such a way that at least one pneumatic brake actuator (16) of the friction brake is in the open state of the emergency brake loop (2) controlled pneumatically by the electromagnetic emergency brake valve device (48, 49) to generate an emergency braking force.

2. Emergency brake unit according to claim 1, **characterised in that** the electromagnetic emergency brake valve device (48, 49) brought into control connection with the emergency brake loop (2) is, by opening the emergency brake loop (2), switched to an emergency braking position in which a compressed air supply (60) is brought into flow connection with a relay valve device (18) for the control of the pneumatic brake actuator (16) of the friction brake, being otherwise switched to a home position in which this flow connection is blocked.

3. Emergency brake unit according to claim 2, **characterised in that** a solenoid valve (64) of the electromagnetic emergency brake valve device (48) is selected by a control unit (66) of an antiskid device of the rail vehicle in such a way that it generates a speed-dependent pilot pressure (cv) for the relay valve device (18), wherein the pneumatic brake actuator (16) controlled by the relay valve device generates a first braking force if speeds exceed a preset limit speed and a second braking force higher than the first braking force if speeds reach or fall below the limit speed.

4. Emergency brake unit according to any of the preceding claims, **characterised in that** the electric switching device (46) comprises at least one electric relay which switches the electromagnetic emergency brake valve device (48, 49) into an electric control connection with the emergency brake loop (2) when deenergised and blocks such a control connection when energised.

5. Emergency brake unit according to any of the preceding claims, **characterised in that** it comprises a control unit (4) of the electropneumatic friction brake, which is separately selectable by the emergency brake loop (2), on the one hand and a control unit (6) of the regenerative brake, which is separately selectable by the emergency brake loop (2), on the other hand.

6. Emergency brake unit according to claim 5, **characterised in that** the control unit (4) of the electropneumatic friction brake controls an electropneumatic pressure regulator (14), which generates a pilot pressure (cv) for the control of a relay valve device (18) controlling the pneumatic brake actuator (18) of the friction brake, using speed-related characteristics, wherein the pilot pressure (cv) is measured by means of a pressure sensor (24) and controlled by routines integrated into the control unit (4) of the electropneumatic friction brake within a pilot pressure control process.

7. Emergency brake unit according to claim 6, **characterised in that** at least one speed sensor (30) is provided for introducing a speed signal into the control unit (4) of the electropneumatic friction brake.

8. Emergency brake unit according to claim 7, **characterised by** a communication of the control unit (4) of the electropneumatic friction brake with the control unit (6) of the regenerative brake, the function of the control unit (6) of the regenerative brake being monitored by the control unit (4) of the electropneumatic friction brake.

9. Emergency brake unit according to claim 8, **characterised in that** it comprises a hierarchical defect management structure which is designed such that:
a) if the control units (4, 6) and the voltage supply of the control units (4, 6) are unimpaired and the emergency brake loop (2) is open, the emergency braking force is generated by the cooperation of the electropneumatic friction brake and of the regenerative brake (blending), wherein the control unit (4) of the electropneumatic friction brake controls the electropneumatic pressure regulator (14), which generates a pilot pressure (cv) for the control of the relay valve device (18) controlling the pneumatic brake actuator (18) of the friction brake, and wherein the brake actuator (16) generates the emergency braking force in dependence on the controlled pilot pressure (cv) in a speed-dependent and continuously variable manner,
b) if there is a fault in the control unit (6) of the regenerative brake or in its voltage supply, the regenerative brake is deactivated by the control unit (4) of the electropneumatic brake and, the emergency brake loop (2) being open, the emergency braking force is generated by the electropneumatic friction brake only, wherein the control unit (4) of the electropneumatic friction brake controls the electropneumatic pressure regulator (14), which generates the pilot pressure (cv) for the control of the relay valve device (18) controlling the pneumatic brake actuator (16) of the friction brake, wherein the brake actuator (16) generates the emergency braking force in dependence on the controlled pilot pressure (cv) in a speed-dependent and continuously variable manner,
c) if there is a fault in the control unit (4) of the electropneumatic brake or in its voltage supply, the emergency brake valve device (48), the emergency brake loop (2) being open, pneumatically controls the relay valve device (18), so that this selects the brake actuator (16) of the friction brake in order to generate the emergency braking force, wherein the emergency braking force is constant or controlled in at least two steps in a speed-dependent manner.

10. Group of rail vehicles consisting of a plurality of rail vehicles and comprising an emergency brake unit according to claim 9, **characterised in that** the hierarchical defect management structure is provided for each vehicle in accordance with the features a) to c) of claim 1.

## Revendications

1. Dispositif (1) de freinage d'urgence d'un véhicule ferroviaire, comprenant au moins une boucle (2) de frein d'urgence, par laquelle au moins un appareil (4, 6) de commande d'au moins un frein à friction électropneumatique et/ou d'au moins un frein de génératrice peut, pour le freinage d'urgence, être commandé au moyen du frein à friction électropneumatique et/ou du frein de génératrice, **caractérisé en ce que** le au moins un appareil (4) de commande commande un dispositif (46) de commutation électrique, de manière à ce que celui-ci mette, en présence d'un défaut dans le au moins un appareil (4) de commande ou dans son alimentation en courant, un dispositif (48, 49) électromagnétique de soupape de frein d'urgence en liaison de commande électrique directe avec la boucle (2) de frein d'urgence, de manière à ce qu'au moins un actionneur (16) pneumatique de frein du frein à friction soit, lorsque la boucle (2) de frein d'urgence est ouverte, commandé pneumatiquement par le dispositif (48, 49) de soupape électromagnétique de frein d'urgence pour la production d'une force de freinage d'urgence.

2. Dispositif de freinage d'urgence suivant la revendication 1, **caractérisé en ce que** le dispositif (48, 49) de soupape électromagnétique de frein d'urgence, mis en liaison de commande avec la boucle (2) de frein d'urgence, est mis par l'ouverture de la boucle (2) de frein d'urgence dans une position de frein d'urgence, dans laquelle un réservoir (60) d'air comprimé est mis en liaison d'écoulement avec un dispositif (18) de soupape relais, qui commande l'actionneur (14) de frein pneumatique du frein à friction, et sinon est mis dans une position de base, dans laquelle il interrompt cette liaison d'écoulement.

3. Dispositif de freinage d'urgence suivant la revendication 2, **caractérisé en ce qu'**un électroaimant (64) du dispositif (48) de soupape électromagnétique de frein d'urgence est commandé par un appareil (66) de commande d'un dispositif anti-enrayeur du véhicule ferroviaire, de manière à produire, en fonction de la vitesse, une pression (cv) de pilotage du dispositif (18) de soupape relais, dans lequel, pour des vitesses dépassant une vitesse limite donnée à l'avance, il est produit une première force de freinage et, pour des vitesses atteignant la vitesse limite ou inférieures à celle-ci, il est produit une deuxième force de freinage plus grande que la première force de freinage par l'actionneur (16) de frein pneumatique commandé par le dispositif de soupape relais.

4. Dispositif de freinage d'urgence suivant l'une des revendications précédentes, **caractérisé en ce que** le dispositif (46) de commutation électrique comporte au moins un relais électrique, qui, sans courant, met le dispositif (48, 49) de soupape électromagnétique de frein d'urgence en liaison de commande électrique avec la boucle (2) de frein d'urgence et qui, alimenté en courant, interrompt cette liaison de commande.

5. Dispositif de freinage d'urgence suivant l'une des revendications précédentes, **caractérisé en ce qu'**il comporte, d'une part, un appareil (4) de commande, pouvant être commandé séparément de la boucle (2) de frein d'urgence, du frein à friction électropneumatique et, d'autre part, un appareil (6) de commande, pouvant être commandé séparément de la boucle (2) de frein d'urgence, du frein de génératrice.

6. Dispositif de freinage d'urgence suivant la revendication 5, **caractérisé en ce que** l'appareil (4) de commande du frein à friction électropneumatique commande un régleur (14) de pression électropneumatique à l'aide de courbes caractéristiques se rapportant à la vitesse, qui produit une pression (cv) de pilotage pour commander un dispositif (18) de soupape relais commandant l'actionneur (16) de frein pneumatique du frein à friction, la pression (cv) de pilotage étant mesurée au moyen d'un capteur (24) de pression et étant régulée dans le cadre d'une régulation de la pression de pilotage par des routines intégrées au frein à friction électropneumatique.

7. Dispositif de freinage d'urgence suivant la revendication 6, **caractérisé en ce qu'**il est prévu au moins un capteur (30) de vitesse pour envoyer un signal de vitesse à l'appareil (4) de commande du frein à friction électropneumatique.

8. Dispositif de freinage d'urgence suivant la revendication 7, **caractérisé par** une communication de l'appareil (4) de commande du frein à friction électropneumatique avec l'appareil (6) de commande du frein de génératrice, le fonctionnement de l'appareil (6) de commande du frein de génératrice étant contrôlé par l'appareil (4) de commande du frein à friction électropneumatique.

9. Dispositif de freinage d'urgence suivant la revendication 8, **caractérisé en ce qu'**il a une structure de traitement de défaut hiérarchisé, telle que :
a) si les appareils (4, 6) de commande sont intacts et si l'alimentation en tension des appareils (4, 6) de commande est intacte et si la boucle (2) de frein d'urgence est ouverte, la force de freinage d'urgence est produite (blending) par coopération du frein à friction électropneumatique et du frein de génératrice, l'appareil (4) de commande du frein à friction électropneumatique commandant le régleur (14) de pression électropneumatique, qui produit la pression (cv) de pilotage pour la commande du dispositif (18) de soupape relais commandant l'actionneur (16) de frein pneumatique du frein à friction, et l'actionneur (16) de frein produisant, en fonction de la vitesse et en continu, la force de freinage d'urgence en fonction de la pression (cv) de pilotage réglée,
b) en présence d'un défaut dans l'appareil (6) de commande du frein de génératrice ou dans son alimentation en tension, le frein de génératrice est désactivé par l'appareil (4) de commande du frein électropneumatique et, si la boucle (2) de frein d'urgence est ouverte, la force de freinage d'urgence est produite seulement par le frein à friction électropneumatique, l'appareil (4) de commande du frein à friction électropneumatique commandant le régleur (14) de pression électropneumatique, qui produit la pression (cv) de pilotage pour la commande du dispositif (18) de soupape relais commandant l'actionneur (16) de frein pneumatique du frein à friction, l'actionneur (16) de frein produisant, en fonction de la vitesse et en continu, la force de freinage en fonction de la pression (cv) de pilotage réglée,
c) en présence d'un défaut dans l'appareil (4) de commande du frein électropneumatique ou de son alimentation en tension, si la boucle (2) de frein d'urgence est ouverte, le dispositif (48) de soupape de frein d'urgence commande pneumatiquement le dispositif (18) de soupape relais et ainsi celui-ci commande l'actionneur de frein pneumatique du frein à friction pour produire la force de freinage d'urgence, la force de freinage d'urgence étant constante ou commandée en fonction de la vitesse et en au moins deux stades.

10. Convoi de véhicules ferroviaires, constitué de plusieurs véhicules ferroviaires, ayant un dispositif de freinage d'urgence suivant la revendication 9, **caractérisé en ce que** la structure de traitement de défaut hiérarchisé suivant les caractéristiques a) à c) de la revendication 9 est prévue véhicule par véhicule.
